# FASCICULE DE BREVET EUROPEEN

(11) **EP 3 011 294 B1**
(45) Date de publication et mention de la délivrance du brevet: **22.07.2020**
(21) Numéro de dépôt: 14731233.4
(22) Date de dépôt: 16.06.2014
(51) Int. Cl.: G01L 9/00, G01L 19/06, G01L 27/00, G01D 3/08

(54) **SYSTEME DE MESURE DE PRESSION DISCRIMINANT UNE PANNE D'UNE SURPRESSION OU D'UNE DEPRESSION**
DRUCKMESSSYSTEM MIT UNTERSCHEIDUNG EINES FEHLERS INFOLGE VON ÜBERDRUCK ODER UNTERDRUCK
SYSTEM FOR MEASURING PRESSURE ABLE TO DISCRIMINATE A FAILURE FROM AN OVER-PRESSURE OR UNDER-PRESSURE

(30) Priorité: 17.06.2013 FR 1355668
(43) Date de publication de la demande: 27.04.2016
(73) Titulaire: Auxitrol S.A., 18000 Bourges (FR)
(72) Inventeur: LONGU, Guillaume, F-18110 Saint Martin d'Auxigny (FR)
(74) Mandataire: Regimbeau
(86) Numéro de dépôt international: PCT/EP2014/062576
(87) Numéro de publication internationale: WO 2014/202533

(56) Documents cités:
- DE-A1-102010 040 373
- FR-A1- 2 966 241
- FR-A1- 2 982 023
- US-A- 5 062 302
- US-A1- 2002 097 034
- US-A1- 2004 189 480

## Description

### DOMAINE TECHNIQUE GENERAL

L'invention concerne le domaine des systèmes de mesure de pression ceux notamment comprenant un capteur de pression à membrane déformable.

### ETAT DE LA TECHNIQUE

Un système de mesure de pression comprend classiquement un capteur de pression permettant de délivrer un signal électrique représentatif d'une pression détectée et un circuit électronique d'amplification qui permet d'amplifier le signal électrique issu du capteur afin d'obtenir un signal de sortie.

Le circuit électronique permet d'amplifier le signal issu du capteur. Les plages haute et basse de la tension du signal de sortie permettent de signaler une défaillance. Par exemple, le circuit électronique peut amplifier le signal électrique issu du capteur tout en gardant des plages comme des zones de détection de défaillance. Les documents US 2002/0097034 et FR 2 966 241 proposent de détecter des défaillances du capteur de pression lorsque la tension du signal de sortie est en-dessous ou au-dessus de la plage de fonctionnement du capteur.

Par ailleurs, le document DE 102010040373 propose de détecter des zones de surpression et de dépression en limitant les variations de la tension du signal de sortie en cas de surpression et de dépression. Néanmoins, en sortie du capteur, le signal électrique croit en fonction de la pression de sorte que le signal de sortie Vs, version amplifiée du signal issu du capteur Ve, peut atteindre la zone haute de tension dédiée aux défaillances en cas de suppression alors que le système de mesure de pression n'est pas défectueux.

Le document US 2004/0189480 décrit un système de mesure de pression capable d'émettre un signal d'accident lorsque la tension est inférieure à une valeur de tension prédéterminée.

Le document US 5,062,302 décrit un capteur de pression comprenant une butée limitant la déflection de la cellule du capteur.

Il existe par conséquent un besoin de pouvoir discriminer un cas de surpression d'un cas de défaillance du capteur.

### PRESENTATION DE L'INVENTION

L'invention propose de discriminer un cas de surpression d'un cas de défaillance du capteur.

A cet effet, l'invention propose un système de mesure de pression comprenant :
- un capteur de pression comprenant :
   ∘ une membrane déformable ;
   ∘ un système de limitation des déformations de la membrane déformable comprenant :
      ▪ une butée inférieure apte à limiter les déformations de la membrane déformable, ladite butée inférieure étant disposée au-dessous de la membrane déformable ; et
      ▪ une butée supérieure apte à limiter les déformations de la membrane déformable, ladite butée supérieure étant disposée au-dessus de la membrane déformable ;
   ∘ un pont résistif disposé sur la membrane déformable, ledit pont résistif étant configuré pour délivrer une tension de pont représentative d'une déformation de la membrane déformable provoquée par une pression appliquée sur ladite membrane déformable, dès lors le système de limitation étant configuré pour limiter la tension de pont en cas de surpression ou de dépression au niveau de la membrane déformable ;
- un circuit électronique d'amplification connecté au pont résistif apte à délivrer une tension de sortie fonction de la tension de pont.

Le système de limitation et le circuit électronique sont conjointement configurés pour que la tension de sortie permette de distinguer un cas de défaillance du capteur de pression et/ou du circuit électronique d'un cas de surpression ou de dépression au niveau de la membrane déformable, le système de limitation et le circuit électronique étant conjointement configurés pour que :
- en fonctionnement nominal, la tension de sortie varie linéairement entre deux valeurs Vsmin et Vsmax pour une pression au niveau de la membrane déformable comprise entre Pmin et Pmax ;
- en cas de surpression au niveau de la membrane déformable, la tension de sortie croit pour saturer à une tension de saturation Vs_sat_max pour une pression au niveau de la membrane déformable supérieur à Pmax ;
- en cas de dépression au niveau de la membrane déformable, la tension de sortie décroit pour saturer à une tension de saturation Vsat_min pour un différentiel de pression au niveau de la membrane inférieur à Pmin ;
- en cas de défaillance du capteur de pression et/ou du circuit électronique, la tension de sortie atteint une tension comprise entre une tension de défaut haut Vdéfaut_haut et une tension d'alimentation du circuit électronique V2, ou atteint une tension comprise entre 0 et une tension de défaut bas Vdéfaut_bas,

La tension de défaut haut Vdéfaut_haut est strictement supérieure à la tension de saturation Vs_sat_max, la tension de saturation Vs_sat_max est strictement supérieure à la valeur de tension nominale Vsmax, la tension de défaut bas Vdéfaut_bas est strictement inférieure à la tension de saturation Vs_sat_min, et la tension de saturation Vsat_min est strictement inférieure à la valeur de tension nominale Vsmin.

L'invention est avantageusement complétée par les caractéristiques suivantes, prises seules ou en une quelconque de leur combinaison techniquement possible :
- la membrane déformable comprend une première partie et une seconde partie entourant la première partie, la seconde partie présentant une épaisseur supérieure à l'épaisseur de la première partie de manière à définir un espace libre, la membrane étant suspendue au-dessus de l'espace libre ;
- la butée inférieure comporte des ilots qui s'étendent dans l'espace libre vers la membrane à partir d'une surface plane de la butée inférieure, les ilots formant une structure en relief de sorte qu'en cas de contact entre les ilots et la première partie de la membrane, la surface de contact entre les ilots et la première partie de la membrane soit faible par rapport aux dimensions de la première partie de la membrane ;
- le système de limitation comporte un évidement central traversant, le système de mesure étant alors apte à mesure une pression de manière différentielle.
- le système de limitation est en matériau choisi parmi les matériaux suivants : verre ; quartz ; alumine ; céramique ; alliages ; Si ; SiC ; saphir.

L'invention permet qu'en cas de surpression le système de limitation permet de « stopper » le déplacement de la membrane ce qui a pour conséquence de limiter la tension de pont du capteur de pression et ainsi de circonscrire la tension de sortie Vs du système de mesure de pression.

L'invention repose ainsi sur un ajustement conjoint du circuit électronique d'amplification et d'un dimensionnement du capteur de pression et notamment du système de déformation (en fonctionnement nominal) afin de circonscrire la tension de sortie Vs dans une zone allouée à la surpression et par conséquent de la différencier d'une tension de saturation du circuit électronique révélatrice d'une défaillance du capteur et/ou du circuit électronique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un système de mesure de pression selon un premier mode de réalisation de l'invention ;
- la figure 2 illustre un système de mesure de pression selon un second mode de réalisation de l'invention ;
- la figure 3 illustre un schéma électrique d'un système de mesure de pression selon l'invention ;
- la figure 4 illustre un fonctionnement du système de mesure de pression selon le premier mode de réalisation de l'invention ;
- la figure 5 illustre un fonctionnement du système de mesure de pression selon le second mode de réalisation de l'invention ;
- la figure 6 illustre un mode de réalisation d'un système de limitation des déformations d'une membrane déformable d'un système de mesure de pression conforme à l'invention.

Sur l'ensemble des figures, les éléments similaires portent des références identiques.

### DESCRIPTION DETAILLEE DE L'INVENTION

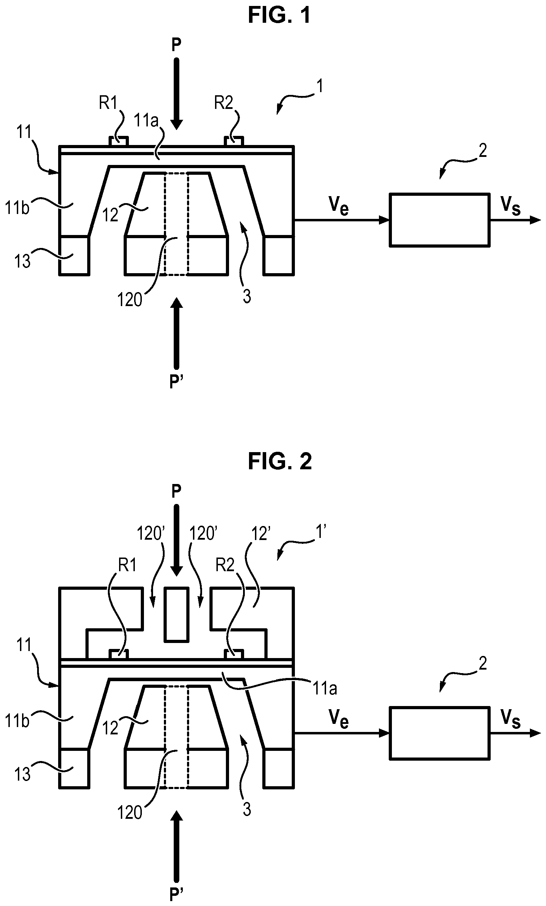

En relation avec les **figures 1** et **2** un système de mesure de pression, selon un premier et un second modes de réalisation, comprend un capteur de pression 1, 1' apte à délivrer une tension Ve représentative d'une pression détectée et un circuit électronique 2 d'amplification connecté au capteur de pression 1, 1'.

Le circuit électronique 2 est apte à délivrer une tension de sortie Vs fonction de la tension Ve issue du capteur de pression 1, 1'.

Le capteur de pression 1, 1' comprend notamment une membrane déformable 11 sur laquelle est disposée un pont résistif 10 qui permet de délivrer la tension Ve dite tension de pont. Cette tension de pont Ve est donc représentative d'une pression P, P' appliquée sur la membrane 11 déformable (au-dessus ou au-dessous de la membrane).

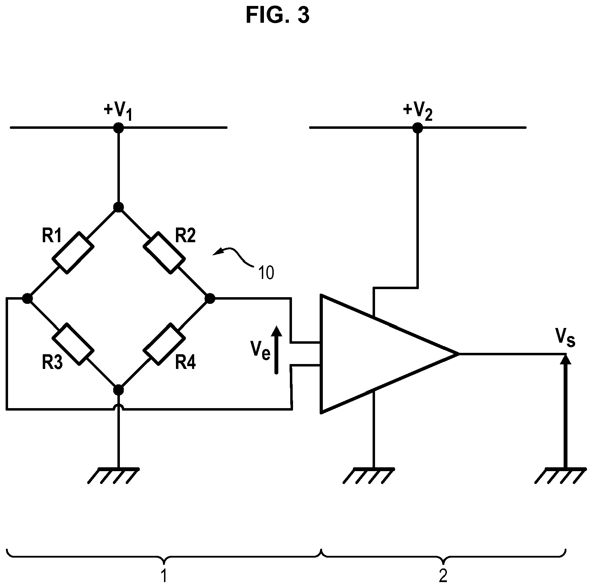

La **figure 3** illustre un schéma électrique des systèmes de mesure selon les premier et second modes de réalisations illustrés sur les figures 1 et 2 respectivement.

Le pont résistif 10 est notamment constitué de quatre éléments résistifs R1, R2, R3, R4 constitués par quatre jauges de contraintes qui permettent de traduire la déformation de la membrane 11 déformable en variations de résistances électriques.

Revenant aux figures 1 et 2, le système de mesure de pression 1, 1' comprend en outre un système 12, 12' de limitation des déformations de la membrane 11 apte à limiter la tension de pont Ve en cas de surpression ou de dépression au niveau de la membrane déformable du capteur de pression 1, 1'.

En particulier, le système 12, 12' de limitation et le circuit 2 électronique sont conjointement configurés pour que la tension de sortie Vs permette de distinguer un cas de panne du capteur de pression 1 et/ou du circuit électronique 2 d'un cas de surpression ou de dépression au niveau du capteur de pression 1.

Le capteur de pression 1 (et donc le pont résistif) est alimenté par une tension d'alimentation de pont V1 et le circuit électronique d'amplification est alimenté par une tension d'alimentation du circuit électronique V2.

En régime nominal, le circuit électronique 2 amplifie la tension de pont Ve afin que la tension de sortie Vs varie entre une valeur comprise entre Vsmin et Vsmax pour des valeurs de pression au niveau de la membrane déformable comprises dans une plage [Pmin-Pmax].

Dans le cas d'un capteur de pression 1 absolu, une pression P est appliquée au-dessus de la membrane 11 déformable, dite pression supérieure P. Dans ce cas, une surpression au niveau de la membrane déformable 11 correspond à une pression supérieure Psupérieure à un seuil Pmax.

Dans le cas d'un capteur de pression 1, 1' différentiel une pression supérieure P est appliquée au-dessus de la membrane 11 déformable et une autre pression P' est appliquée en dessous de la membrane 11 déformable dite pression inférieure. Dans ce cas, une surpression au niveau de la membrane 11 correspond à un différentiel de pression P-P'>Pmax et une dépression au niveau de la membrane 11 correspond à un différentiel P-P'<Pmin. Le régime nominal est donc pour un différentiel de pression compris entre Pmin et Pmax.

Selon le premier mode de réalisation illustré sur la figure 1, le système de limitation 12 est donc apte à limiter une pression P appliquée au-dessus de la membrane déformable 11. Selon ce mode de réalisation, seuls les cas de surpression peuvent être distingués d'un cas de défaillance du capteur de pression 1 et/ou du circuit 2 électronique.

En particulier, selon ce premier mode de réalisation, le système de limitation 12 se présente sous la forme d'une butée inférieure 12 disposée dans l'espace libre 3 au-dessous de la membrane déformable 11.

La butée inférieure 12 et la membrane déformable sont de préférence disposés sur un substrat support 13 qui peut être un matériau à base de verre, de Silicium quartz, pyrex™, saphir, alumine, Si, SiC.

L'épaisseur du substrat support 13 est typiquement comprise entre 500 µm et 2000 µm.

La membrane 11 et la butée inférieure 12 sont connectés au substrat support 13 par scellement anodique ou au moyen d'une liaison moléculaire ou atomique avec ou sans couche intermédiaire, ou par frittage ou par brasage.

De manière complémentaire, la butée inférieure 12, en relation avec la figure 1, est de forme générale trapézoïdale, la grande base étant disposée sur le substrat 13 support et la petite base est disposée directement en dessous de la membrane 11 en particulier sous sa seconde partie 11b, cette petite base définie une surface plane de la butée.

Dans le cas d'un capteur de pression différentiel la butée inférieure 12 comprend un évidement 120 central traversant typiquement en forme de cône.

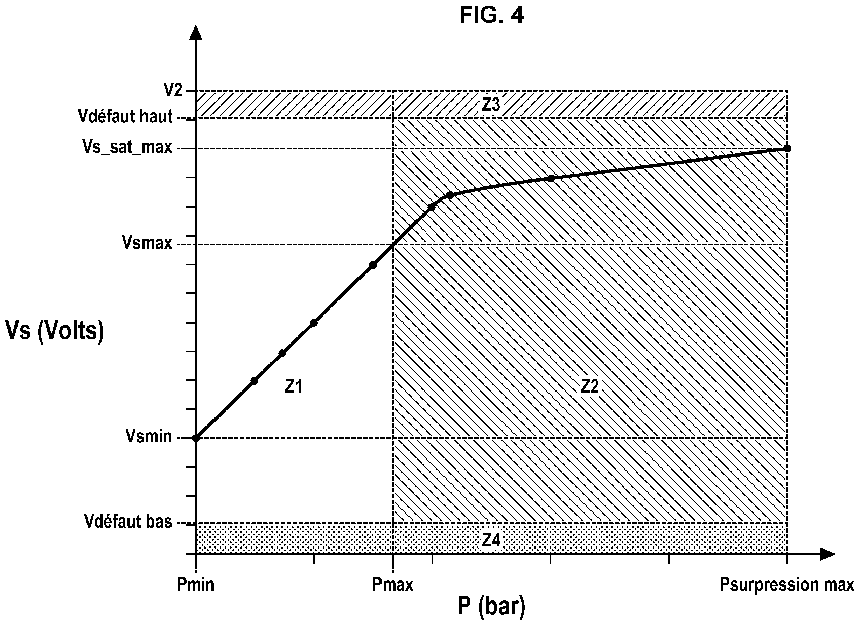

La **figure 4** illustre un fonctionnement du système de mesure de pression selon le premier mode de réalisation (avec une butée inférieure 12). Sur cette figure 3, la tension de sortie Vs (volts) est fonction de la pression P (bar) appliquée sur la membrane 11 du capteur de pression 1, la tension de sortie Vs est donnée par la relation suivante Vs = G x Ve + offset avec G un coefficient d'amplification et offset un décalage d'échelle.

Toujours en relation avec la figure 4, le fonctionnement nominal définit une première zone Z1 (pour Vs comprise entre Vsmin et Vsmax), le cas de surpression définit une seconde zone Z2 dite zone de surpression (pour Vs comprise entre Vsmax et Vs_sat_max pour une pression P entre Pmax et Psurpression_max), certaines défaillances du capteur de pression 1 et/ou d'un circuit électronique définissent une zone de défaut haute : troisième zone Z3 (pour Vs comprise entre une tension Vdéfaut_haut et la tension d'alimentation V2), et d'autres défaillances du capteur de pression 1 et/ou d'un circuit électronique définissent une zone de défaut bas de tension : quatrième zone Z4 (pour Vs comprise entre 0 et Vdéfaut_bas).

De préférence, la tension de saturation Vs_sat_max est supérieure à la tension nominale Vsmax. Par ailleurs, la tension de défaut Vdéfaut_haut est de préférence comprise entre la tension de saturation Vs_sat_max et la tension d'alimentation V2. Enfin, la tension de défaut Vdéfaut_bas est de préférence inférieure à la tension nominale Vsmin, tout en étant non nulle.

Selon le second mode de réalisation, en relation avec la figure 2, en plus des éléments constituant du système de mesure de pression 1 selon le premier mode de réalisation, le système de mesure de pression 1' selon le second mode de réalisation comprend un système de limitation apte, outre à limiter une pression appliquée au-dessus de la membrane, à limiter une pression P' (pression inférieure) appliquée au-dessous de la membrane 11 (notamment dans le cas d'un système de mesure pression différentielle). En particulier, le système de limitation 12' permet de détecter outre les cas de surpression, les cas de dépression lorsque le différentiel P-P' est négatif.

Selon ce second mode de réalisation, le système de limitation comprend outre la butée inférieure 12, une butée supérieure 12' disposée au-dessus de la membrane déformable 11.

La butée supérieure 12' présente des évidements 120' en son centre et est connectée à la membrane 11 au moyen d'un scellement anodique ou au moyen d'une liaison moléculaire ou covalente avec ou sans couche intermédiaire, ou par frittage ou par brasage.

Le système de limitation 12, 12' est de préférence constitué dans un matériau identique à celui de la membrane 11 ou en alliages, du saphir, de l'alumine, de la céramique, du quartz ou du verre. Il peut de même être constitué dans un matériau identique à celui du substrat support 13.

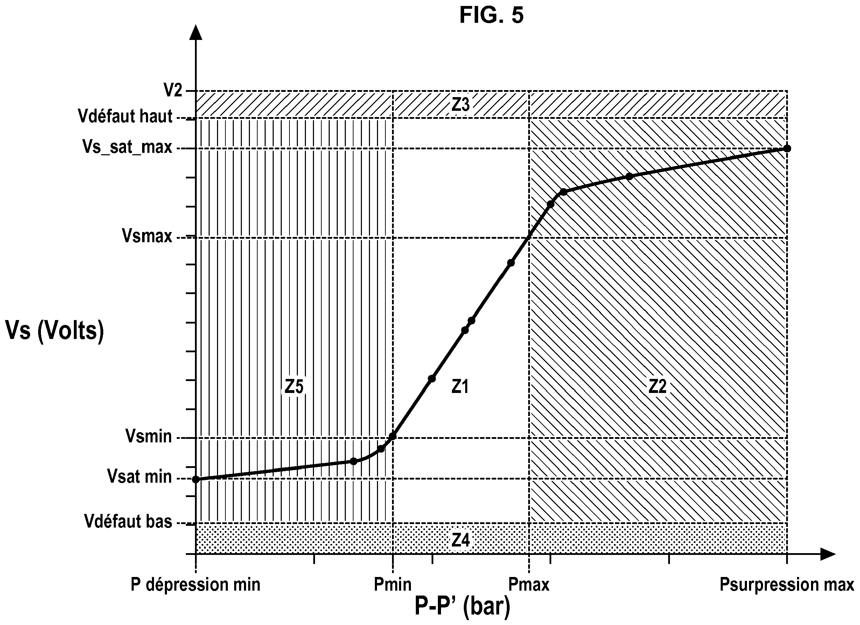

La **figure 5** illustre un fonctionnement du système de mesure de pression selon le second mode de réalisation (avec les butée inférieure 12 et supérieure 12').

Sur cette figure 5 la tension Vs (volts) est fonction du différentiel de pression P-P' (bar) appliqué sur la membrane 11 du capteur de pression 1, la tension de sortie Vs est donnée par la relation suivante Vs = G x Ve + offset avec G un coefficient d'amplification et offset un décalage d'échelle.

Sur cette figure 5 outre la première zone Z1, la seconde zone Z2, la troisième zone Z3 et la quatrième zone Z4, une cinquième zone Z5 dite zone de dépression pour Vs comprise entre Vsat_min et Vsmin pour un différentiel de pression P'-P<0 au niveau de la membrane 11 compris ente Pdépression_min et Pmin.

De préférence, la tension de saturation Vsat_min est inférieure à la tension nominale Vsmin. Par ailleurs, la tension de défaut Vdéfaut_bas est de préférence inférieure à la tension de saturation Vsat_min.

En conséquence, le système de limitation 12, 12' et le circuit électronique sont conjointement configurés pour que
- en fonctionnement nominal, la tension de sortie Vs varie linéairement entre deux valeurs Vsmin et Vsmax pour la plage de pression prédéterminée [Pmin- Pmax] ;
- en cas de surpression, la tension de sortie Vs croit pour saturer à une tension de saturation Vs_sat_max pour une pression (ou différentiel de pression) au niveau de la membrane déformable supérieure à Pmax ;
- en cas de défaillance du capteur de pression 1 et/ou du circuit 2 électronique, la tension de sortie Vs atteint une tension Vdéfaut_haut (Z3) ou Vdéfaut_bas (Z4) du circuit électronique telle qu'une défaillance du capteur de pression 1 et/ou du circuit électronique n'est pas considérée comme un cas de surpression ou de dépression au niveau du capteur de pression 1 ;
- en cas de dépression, la tension de sortie décroit pour varier entre deux valeurs Vsat_min et Vs_min (Z5) pour un différentiel de pression P'-P<Pmin au niveau de la membrane déformable 11.

De manière avantageuse, le capteur de pression est un capteur de pression absolu ou différentiel tel que décrit dans la demande de brevet publiée sous le numéro FR 2 859 281 ou FR 2 982 023 à savoir un capteur de pression comprenant une membrane 11 suspendue au-dessus d'un espace libre, espace libre dans lequel est disposé le système de limitation de pression qui se présente sous la forme d'une butée. D'autres formes de capteur de pression peuvent être aussi envisagées comme celle décrite dans la demande internationale WO 90/04701 dès lors que le capteur de pression comprend un système pour limiter une pression au niveau de la membrane déformable.

De manière préférée, comme cela est illustré sur les figures 1 et 2, la membrane déformable 11 comprend une première partie 11a et une seconde partie 11b entourant la première partie 11a, la seconde partie 11b présentant une épaisseur supérieure à l'épaisseur de la première partie 11a de manière à définir un espace libre 3, la membrane 11 étant suspendue au-dessus de l'espace libre 3

L'épaisseur de la première partie 11a est typiquement comprise entre 20 et 100 µm, la valeur étant définie selon la plage de la grandeur mécanique ou dynamique à mesurer.

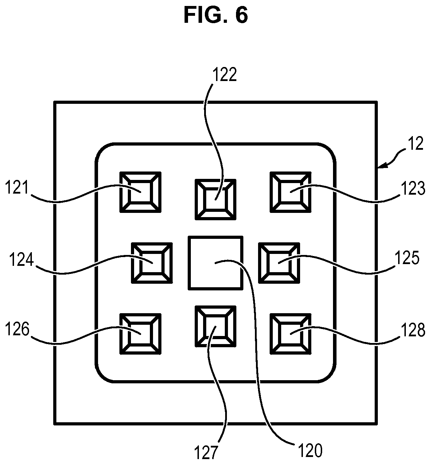

La **figure 6** illustre un mode de réalisation d'une butée inférieure utilisée dans le système de mesure pression selon les premier et second modes de réalisation dans lequel la butée comporte des ilots 121-128 qui s'étendent dans l'espace libre 3 vers la membrane 11 à partir d'une surface plane de la butée inférieure 12.

De tels ilots 121-128 forment une structure en relief de sorte qu'en cas de contact entre les ilots 121-128 et la première partie 11a de la membrane 11, la surface de contact entre les ilots 121-128 et la première partie 11a de la membrane 11 soit faible par rapport aux dimensions de la seconde partie 11b de la membrane 11.

Les ilots ainsi formés permettent une circulation optimale du fluide dans l'espace entre la membrane 11 et la butée inférieure 12 dans le cas d'un système de mesure apte à mesurer une pression de manière différentielle.

Les ilots 121-128 comportent avantageusement des facettes inclinées qui sont orientées selon des angles aigus supérieurs à zéro degré par rapport à la surface plane de la butée inférieure. Ils sont notamment en forme de mésa.

Les ilots 121-128 permettent également de minimiser les erreurs dues à la variation de densité du fluide (en cas de variation de températures au cours de l'utilisation du système de mesure de pression par exemple de -50°C à 180 °C) dans l'espace situé entre la butée inférieure 12 et la membrane 11.

Les ilots ont une hauteur comprise préférentiellement entre 10µm et 50µm, et une largeur à la base comprise entre 20µm et 200µm.

Par ailleurs, les ilots 121-128 sont dimensionnés pour que la première partie de la membrane et les ilots soient espacés d'une distance comprise entre 5 et 30 µm, de préférence 10 µm.

Comme mentionné ci-dessus, il existe un écart entre la butée inférieure 12 et la membrane 11. Cet écart représente la distance maximale de déformation de la membrane 11. De cette manière, une déformation plus importante que cet écart met alors la membrane 11 en appui contre la butée inférieure 12 ce qui empêche une surdéformation liée à une surpression. C'est en particulier contre les ilots que la membrane 11 vient en appui dans le cas d'une surpression appliquée sur le capteur de pression 1.

De manière avantageuse, la valeur de cet écart peut être choisie en fonction des paramètres de résistance à la déformation de la membrane 11 (dépendant notamment de son épaisseur et du matériau qui la constitue) avec un écart seuil à partir duquel la membrane risque de se détériorer.

De cette façon, il est possible d'ajuster les paramètres de la butée inférieure 12 en fonction de l'application visée.

## Revendications

1. Système de mesure de pression comprenant :
- un capteur de pression (1) comprenant :
∘ une membrane déformable (11) ;
∘ un système (12, 12') de limitation des déformations de la membrane déformable (11) comprenant :
▪ une butée inférieure (12) apte à limiter les déformations de la membrane déformable (11), ladite butée inférieure (12) étant disposée au-dessous de la membrane déformable (11) ; et
▪ une butée supérieure (12') apte à limiter les déformations de la membrane déformable (11), ladite butée supérieure (12') étant disposée au-dessus de la membrane déformable (11) ;
∘ un pont (10) résistif disposé sur la membrane déformable (11), ledit pont résistif étant configuré pour délivrer une tension de pont (Ve) représentative d'une déformation de la membrane déformable (11) provoquée par une pression (P, P') appliquée sur ladite membrane déformable, dès lors le système (12, 12') de limitation étant configuré pour limiter la tension de pont (Ve) en cas de surpression ou de dépression au niveau de la membrane déformable ;
- un circuit (2) électronique d'amplification connecté au pont résistif apte à délivrer une tension de sortie (Vs) fonction de la tension de pont (Ve) ;
dans lequel le système (12, 12') de limitation et le circuit électronique (2) sont conjointement configurés pour que la tension de sortie (Vs) permette de distinguer un cas de défaillance du capteur de pression (1) et/ou du circuit (2) électronique d'un cas de surpression ou de dépression au niveau de la membrane déformable, le système de limitation et le circuit électronique étant conjointement configurés pour que :
- en fonctionnement nominal, la tension de sortie (Vs) varie linéairement entre deux valeurs Vsmin et Vsmax pour une pression au niveau de la membrane déformable comprise entre Pmin et Pmax ;
- en cas de surpression au niveau de la membrane déformable, la tension de sortie (Vs) croit pour saturer à une tension de saturation Vs_sat_max pour une pression au niveau de la membrane déformable (11) supérieur à Pmax ;
- en cas de dépression au niveau de la membrane déformable, la tension de sortie (Vs) décroit pour saturer à une tension de saturation Vsat_min pour un différentiel de pression au niveau de la membrane inférieur à Pmin ;
- en cas de défaillance du capteur de pression (1) et/ou du circuit (2) électronique, la tension de sortie (Vs) atteint une tension comprise entre une tension de défaut haut Vdéfaut_haut et une tension d'alimentation du circuit électronique V2, ou atteint une tension comprise entre 0 et une tension de défaut bas Vdéfaut_bas,
dans lequel la tension de défaut haut Vdéfaut_haut est strictement supérieure à la tension de saturation Vs_sat_max, la tension de saturation Vs_sat_max est strictement supérieure à la valeur de tension nominale Vsmax, la tension de défaut bas Vdéfaut_bas est strictement inférieure à la tension de saturation Vs_sat_min, et la tension de saturation Vsat_min est strictement inférieure à la valeur de tension nominale Vsmin.

2. Système de mesure de pression selon la revendication 1, dans lequel la membrane déformable (11) comprend une première partie (11a) et une seconde partie (11b) entourant la première partie (11a), la seconde partie (11b) présentant une épaisseur supérieure à l'épaisseur de la première partie (11a) de manière à définir un espace libre (3), la membrane étant suspendue au-dessus de l'espace libre (3).

3. Système de mesure pression selon l'une quelconque des revendications 1 ou 2, dans lequel la butée inférieure comporte des ilots (121-128) qui s'étendent dans l'espace libre (3) vers la membrane (11) à partir d'une surface plane de la butée inférieure (12), les ilots (121-128) formant une structure en relief de sorte qu'en cas de contact entre les ilots (121-128) et la première partie (11a) de la membrane (11), la surface de contact entre les ilots (121-128) et la première partie (11a) de la membrane (11) soit faible par rapport aux dimensions de la première partie (11b) de la membrane (11).

4. Système de mesure de pression selon quelconque l'une des revendications 1 à 3, dans lequel le système de limitation (12, 12') comporte un évidement (120, 120') central traversant, le système de mesure étant alors apte à mesurer une pression de manière différentielle.

5. Système de mesure de pression selon l'une quelconque des revendications 1 à 4, dans lequel le système de limitation (12, 12') est en matériau choisi parmi les matériaux suivants : verre ; quartz ; alumine ; céramique ; alliages ; Si ; SiC ; saphir.

## Patentansprüche

1. Druckmesssystem, umfassend:
- einen Drucksensor (1), umfassend:
∘ eine verformbare Membran (11);
∘ ein System (12, 12') zum Begrenzen der Verformungen der verformbaren Membran (11), umfassend:
▪ einen unteren Anschlag (12), der geeignet ist, die Verformungen der verformbaren Membran (11) zu begrenzen, wobei der genannte untere Anschlag (12) unterhalb der verformbaren Membran (11) angeordnet ist; und
▪ einen oberen Anschlag (12'), der geeignet ist, die Verformungen der verformbaren Membran (11) zu begrenzen, wobei der genannte obere Anschlag (12') oberhalb der verformbaren Membran (11) angeordnet ist
∘ eine ohmsche Brücke (10), die auf der verformbaren Membran (11) angeordnet ist, wobei die genannte ohmsche Brücke ausgestaltet ist, um eine Brückenspannung (Ve) zu liefern, die eine Verformung der verformbaren Membran (11) darstellt, die durch einen Druck (P, P') hervorgerufen wird, der auf die genannte verformbare Membran angewendet ist, sobald das System (12, 12') zum Begrenzen zum Begrenzen der Brückenspannung (Ve) bei einem Überdruck oder Unterdruck an der verformbaren Membran ausgestaltet ist;
- einen elektronischen Verstärkungsschaltkreis (2), der an die ohmsche Brücke angeschlossen ist und geeignet ist, eine Ausgangsspannung (Vs) auszugeben, die von der Brückenspannung (Ve) abhängt;
bei dem das System (12, 12') zum Begrenzen und der elektronische Schaltkreis (2) gemeinsam ausgestaltet sind, damit die Ausgangsspannung (Vs) das Unterscheiden eines Ausfallfalls des Drucksensors (1) und / oder des elektronischen Schaltkreises (2) von einem Überdruck- oder Unterdruckfall an der verformbaren Membran zulässt, wobei das System zum Begrenzen und der elektronische Schaltkreis gemeinsam ausgestaltet sind, damit:
- im Nennbetrieb die Ausgangsspannung (Vs) linear zwischen den zwei Werten Vsmin und Vsmax für einen Druck an der verformbaren Membran schwankt, der zwischen Pmin und Pmax inbegriffen ist;
- die Ausgangsspannung (Vs) bei einem Überdruck an der verformbaren Membran wächst, um bei einer Sättigungsspannung Vs_sat_max für einen Druck bei der verformbaren Membran (11) von mehr als Pmax zu sättigen;
- die Ausgangsspannung (Vs) bei einem Unterdruck an der verformbaren Membran abnimmt, um bei einer Sättigungsspannung Vsat_min für ein Druckdifferenzial an der Membran bei weniger als Pmin zu sättigen;
- die Ausgangsspannung (Vs) bei einem Ausfall des Drucksensors (1) und / oder des elektronischen Schaltkreises (2) eine Spannung erreicht, die zwischen einer hohen Fehlerspannung Vdéfaut_haut und einer Versorgungsspannung des elektronischen Schaltkreises V2 erreicht oder eine Spannung erreicht, die zwischen 0 und einer niedrigen Fehlerspannung Vdéfaut_bas inbegriffen ist,
bei dem die hohe Fehlerspannung Vdéfaut_haut strikt höher ist als die Sättigungsspannung Vs_sat_max, wobei die Sättigungsspannung Vs_sat_max strikt höher ist als der nominale Spannungswert Vsmax, die niedrige Fehlerspannung Vdéfaut_bas strikt niedriger ist als die Sättigungsspannung Vs_sat_min und die Sättigungsspannung Vsat_min strikt niedriger ist als der nominale Spannungswert Vsmin.

2. Druckmesssystem gemäß Anspruch 1, bei dem die verformbare Membran (11) einen ersten Teil (11a) und einen zweiten Teil (11b) umfasst, der den ersten Teil (11a) umgibt, wobei der zweite Teil (11b) eine größere Dicke aufweist als die Dicke des ersten Teils (11a) derart, dass ein freier Raum (3) definiert wird, wobei die Membran oberhalb des freien Raums (3) aufgehängt ist.

3. Druckmesssystem gemäß irgendeinem der Ansprüche 1 oder 2, bei dem der untere Anschlag Inseln (121-128) umfasst, die sich in dem freien Raum (3) ausgehend von einer ebenen Oberfläche des unteren Anschlags (12) zu der Membran (11) erstrecken, wobei die Inseln (121-128) eine Reliefstruktur derart formen, dass bei Kontakten zwischen den Inseln (121-128) und dem ersten Teil (11a) der Membran (11) die Kontaktoberfläche zwischen den Inseln (121-128) und dem ersten Teil (11a) der Membran (11) im Verhältnis zu den Abmessungen des ersten Teils (11b) der Membran (11) gering ist.

4. Druckmesssystem gemäß irgendeinem der Ansprüche 1 bis 3, bei dem das System (12, 12') zum Begrenzen eine zentrale durchquerende Ausnehmung (120, 120') umfasst, wobei das Messsystem dann geeignet ist, einen Druck differential zu messen.

5. Druckmesssystem gemäß irgendeinem der Ansprüche 1 bis 4, bei dem das System (12, 12') zum Begrenzen aus einem Material ist, das aus den folgenden Materialien ausgewählt ist: Glas, Quarz, Aluminiumoxid, Keramik, Legierungen, Si, SiC, Saphir.

## Claims

1. A pressure measuring system comprising:
- a pressure sensor (1) comprising:
∘ a deformable membrane (11);
∘ a system (12, 12') for limiting deformations of the deformable membrane (11) comprising:
▪ a lower stop (12) able to limit deformations of the deformable membrane (11), said lower stop (12) being disposed above the deformable membrane (11); and
▪ an upper stop (12') able to limit deformations of the deformable membrane (11), said upper stop (12') being disposed above the deformable membrane (11);
∘ a resistive bridge (10) disposed on the deformable membrane (11), said resistive bridge (10) being configured to deliver a bridge voltage (Ve) representative of a deformation of the deformable membrane (11) caused by a pressure (P, P') applied to said deformable membrane, hence the limiting system (12, 12') being configured to limit the bridge voltage (Ve) in case of an over-pressure or under-pressure at the deformable membrane;
- an electronic amplification circuit (2) connected to the resistive bridge able to deliver an output voltage (Vs) as a function of the bridge voltage (Ve);
wherein the limiting system (12, 12') and electronic circuit (2) are configured together so that the output voltage (Vs) enables a failure case of a pressure sensor (1) and/or electronic circuit (2) to be distinguished from an over-pressure or under-pressure at the deformable membrane, the limiting system and electronic circuit being configured together so that:
- in nominal operation, the output voltage (Vs) linearly varies between two values Vsmin and Vsmax for a pressure at the deformable membrane comprised between Pmin and Pmax;
- in case of an over-pressure at the deformable membrane, the output voltage (Vs) increases to saturate at a saturation voltage Vs_sat_max for a pressure at the deformable membrane (11) greater than Pmax;
- in case of an under-pressure at the deformable membrane, the output voltage (Vs) decreases to saturate at a saturation voltage Vsat_min for a pressure differential at the membrane lower than Pmin;
- in case of a failure of the pressure sensor (1) and/or electronic circuit (2), the output voltage (Vs) reaches a voltage between a high fault voltage Vhigh_fault and a supply voltage of the electronic circuit V2, or reaches a voltage between 0 and a low fault voltage Vlow_fault,
wherein the high fault voltage Vhigh_fault is strictly greater than the saturation voltage Vs_sat_max, the saturation voltage Vs_sat_max is strictly greater than the nominal voltage value Vsmax, the low fault voltage Vlow_fault is strictly lower than the saturation voltage Vs_sat_min, and the saturation voltage Vs_sat_min is strictly lower than the nominal voltage value Vs_min.

2. The pressure measuring system according to claim 1, wherein the deformable membrane (11) comprises a first part (11a) and a second part (11b) surrounding the first part (11a), the second part (11b) having a thickness greater than the thickness of the first part (11a) so as to define a free space (3), the membrane being suspended above the free space (3).

3. The pressure measuring system according to any of claims 1 or 2, wherein the lower stop includes islands (121-128) which extend in the free space (3) towards the membrane (11) from a planar surface of the lower stop (12), the islands (121-128) forming a relief structure so that in case of a contact between the islands (121-128) and the first part (11a) of the membrane (11), the contact surface area between the islands (121-128) and the first part (11a) of the membrane (11) is low with respect to the dimensions of the first part (11b) of the membrane (11).

4. The pressure measuring system according to any of claims 1 to 3, wherein the limiting system (12, 12') includes a central through recess (120, 120'), the measuring system being then able to measure a pressure differentially.

5. The pressure measuring system according to any of claims 1 to 4, wherein the limiting system (12, 12') is of a material selected from the following materials: glass; quartz; alumina; ceramic; alloys; Si; SiC; sapphire.
